(19) Europäisches Patentamt
European Patent Office
Office européen des brevets

(11) Publication number: **0 119 703**
**A1**

# (12) EUROPEAN PATENT APPLICATION

(21) Application number: **84300678.4**

(22) Date of filing: **03.02.84**

(51) Int. Cl.³: **B 32 B 27/08**, B 65 D 75/26

(30) Priority: **07.02.83 US 464691**

(43) Date of publication of application: **26.09.84**
**Bulletin 84/39**

(84) Designated Contracting States: **AT BE CH DE FR GB IT LI LU NL SE**

(71) Applicant: **AMERICAN CAN COMPANY, American Lane P.O. Box 3610, Greenwich, Connecticut 06836-3610 (US)**

(72) Inventor: **Ching-Hsiang Hsu, Joseph, 1116 Oxford Court, Neenah Wisconsin 54956 (US)**
Inventor: **Steen, Robert A., 3543 Northridge Lane, Appleton Wisconsin 54911 (US)**

(74) Representative: **Harvey, David Gareth et al, Graham Watt & Co. Riverhead, Sevenoaks Kent TN13 2BN (GB)**

## (54) Improved package for oil-containing products.

(57) An improved package for an oil-containing product is made from a multiple layer packaging sheet material which has reduced propensity to cockling. The multiple layer sheet material includes a layer or layers (22, 24) susceptible to swelling when in contact with oil thus giving a cockled appearance. Such an appearance is, however, guarded against because the sheet material also includes a layer (20) which impedes penetration of oil, the impeding layer being interposed between the oil-containing product and the oil susceptible layer. The impeding layer comprises polypropylene, a blend rich in polypropylene or a propylene-rich copolymer.

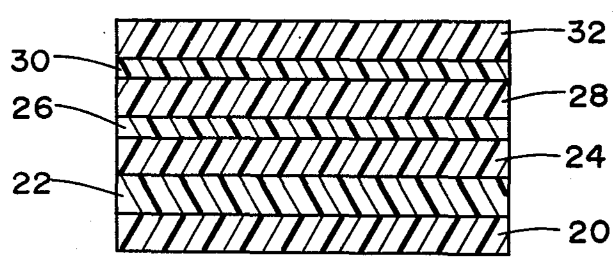


EP 0 119 703 A1

"IMPROVED PACKAGE FOR OIL-CONTAINING PRODUCTS"

This invention relates to the packaging of products containing oils, and more particularly to improved packages using flexible sheet materials. This invention is particularly applicable to such products which are sensitive to moisture, and which require that the package material serve to protect them from infusion of moisture from the outside environment. Such products have conventionally been packaged in glassine-based sheet structures. More recently, all-plastics structures have been used to advantage to improve product quality through increased protection from infusions from the outside environment. Industry has been struggling with an unresolved problem that certain plastics packaging structures, while providing excellent protection to the product, are showing severe cockling during the normal shelf life of the product. The term "cockling" as used herein means to have ripples or puckers, usually due to some uneven tension, and the uneven tension yielding a surface that is not smooth but is uneven and wavy.

We have been seeking a solution to the said problem and, arising from this, the present invention provides a package having a plastics sheet structure which has reduced tendency to cockle upon contact with oil. Such a package can advantageously provide good protection from gaseous infusions from the outside environment, especially infusions of oxygen and water vapour.

We have surprisingly found that the problem of cockling can be associated with one of the more desirable barrier materials used in a multiple-layer film structure, namely high density polyethylene (HDPE). HDPE is an excellent, and economical barrier to transmission of water vapour. It has been discovered that a relatively thick HDPE layer in the film is responsible for the observed cockling. It has been found, also, that in packages of oil-containing products such as potato chips, at places where the chips touch the packaging material, oil is transferred from the chips to the surface of the packaging material. Our work shows that this oil can penetrate certain of the packaging material layers. In conventional packaging materials, the oil is able to penetrate to the HDPE layer. The HDPE layer absorbs and retains oil, creating localized swellings in this layer wherever the oil-containing product touches the packaging material. These localized swellings manifest themselves as cockling of the packaging material. A typical sheet structure susceptible to such problems is one having the following structure, and being 1.6 to 2.0 mil (0.041 to 0.051 mm) thick:

/EVOH/adhesive/HDPE/HDPE/Sealant/

EVOH is ethylene vinyl alcohol copolymer.

A typical, and effective heat sealing sealant layer is a blend of ionomer, HDPE, and ethylene vinyl acetate (EVA). This structure, however, is susceptible to cockling.

Once the HDPE was discovered as being the oil-susceptible layer, several possible solutions were considered. One consideration was the omission of HDPE from the structure. This was not acceptable because of its desirable function as a moisture barrier. Another consideration was to accept the oil absorption phenomenon and add stiffening layers to the film so that the cockling would be physically restrained by the sheet stiffness. While this might work, it would add excessive cost to the package. Still another consideration was to make the sealant layer thicker to provide a longer path for the oil to traverse before it could reach the HDPE layer. Again, cost factors ruled out this consideration.

It was finally concluded that the easiest, and indeed, the most economical method of solving the cockling problem would be to find a material which could be introduced between the HDPE layer and the oil-containing product to impede the penetration of oil to the HDPE. Different sealant materials were tried. Of all the polymers substituted for the conventional sealant layer, all except one family of polymers failed to improve the cockling problem. Materials tried, and found unacceptable, were EVA, ionomer, maleic anhydride, ethylene methyl acrylate (EMA), low density polyethylene (LDPE), linear low density polyethylene (LLDPE), a blend of 50% by weight ionomer and 50% polypropylene, a blend of 20% (EVOH) and 80% EMA, and a blend of 50% EVOH and 50% EAA.

As a result of these extensive studies, multiple-layer packaging sheet materials were discovered which impede cockling, and are satisfactory to meet the standards of the snack industry, for the packaging of oil-containing products. The sheet materials have in common a first layer which is susceptible to absorption of oil and swelling upon absorption of the oil, which layer comprises HDPE. A second layer is positioned such that, in the package, it is between the first layer and the product. The second layer comprises the sealant layer and is polypropylene. The term polypropylene (PP), as used herein in connection with the second layer, includes homopolymers, copolymers and blends which include at least 70% propylene moieties.

The present invention provides a package comprising a multiple layer flexible packaging sheet material for a product containing an oil, wherein the flexible sheet material is characterised by comprising:

(a) a first layer which is susceptible to absorption of oil and to swelling upon oil absorption, the layer comprising high density polyethylene;

(b) a second layer of polypropylene or a propylene-rich copolymer or polymer blend adhered to one surface of the first layer, and located between the first layer and the product; and

(c) a third layer adhered to the other surface of the first layer and serving as an adhesive to adhere a fourth, barrier layer to the first layer.

By using PP as the sealant layer, the cockling problem is substantially reduced. Exemplary packages of this invention then have the following layers, taken in order from the inside of the package structure: the PP layer, the HDPE layer, an adhesive layer, and an oxygen barrier layer. Optionally, the oxygen barrier layer may have laminated thereonto an additional layer comprising an abuse resistant material such as oriented polypropylene, using an intervening adhesive layer.

The invention and preferred embodiments thereof will now be described in more details, by way of example only, with reference to the accompanying drawings, in which:

FIGURE 1 is a pictorial view of a package embodying this invention, with part of the packaging material employed cut away to show the enclosed product.

FIGURE 2 shows a cross-section of a preferred embodiment of the packaging sheet material useful in practising the invention.

FIGURE 3 shows a cross-section of another embodiment of the packaging sheet material useful in practising the invention.

FIGURE 4 shows a cross-section of yet another embodiment of the packaging sheet material useful in practising the invention.

Turning now to the drawings, FIGURE 1 represents a typical application of the packaging of the invention. A package 10 includes the oil-containing product 12, in this case shown as potato chips, and is made from a flexible packaging film 14. The package is heat sealed closed along one longitudinal seam, not shown, and by heat seals 16 at each end of the package.

FIGURES 2, 3 and 4 show illustrative cross-sections of sheet structures useful in making the package of this invention. Referring now to FIGURE 2, layer 20 is a heat sealable polypropylene layer and forms the seals necessary in making the bag. Layer 22 is a first layer of HDPE. Layer 24 is a second layer of HDPE. Layer 26 is a first adhesive layer. Layer 28 is a polymer selected for its barrier properties to transmission of gaseous media, such as oxygen, which media may be detrimental to the contained product. Layer 30 is a second adhesive layer. Layer 32 is an abuse resistant layer.

Addressing now each layer in detail, packages embodying this invention all have in common at least one layer containing HDPE, whose composition is susceptible to absorption of oil and swelling consequential upon that absorption. In the FIGURE 2 structure, layers 22 and 24 have that susceptibility. The compositions of layers 22 and 24 may be entirely HDPE or they may be polymeric blends having a high percentage of HDPE. Specifically contemplated are compositions having blended-in coloring concentrate in carriers other than HDPE. Other polymer compositions may exhibit the same problem of oil susceptibility and it would be obvious to apply the solution herein described to this problem to them too.

Layer 20 serves the dual functions of being heat sealable and of impeding inward transmission of the oil contained in the product 12. The layer 20 is primarily polypropylene. Its composition may include polypropylene copolymers and blends of up to 10% by weight of other blend-compatible polymers. A preferred composition for layer 20 is a propylene-ethylene copolymer containing 2.5% to 3.5% by weight ethylene. In addition, layer 20 may include conventional additives to improve processing of the film; exemplary are additives such as slip and anti-block agents.

Layer 28 is a barrier against gaseous transmission through the packaging film. While the composition of layer 28 may be selected with substantial freedom, and is not critical to the invention, the most commonly used barrier composition is EVOH, which is an excellent barrier to oxygen. An alternate barrier, which is particularly facile to use where the oxygen barrier requirement is not so severe, is nylon.

Layer 32 is chosen for its abuse resistance, clarity, and gloss; as it serves as the exterior layer as in the package 10 of FIGURE 1. While the composition of layer 32 may be selected with substantial freedom, and is not critical to the invention, the preferred material is oriented polypropylene (OPP). Another, though more expensive, material is an oriented polyester.

The selection of compositions for use in adhesive layers 26 and 30 depends upon the compositions chosen for layers 28 and 30, and to some extent, depends upon the exact composition of layer 24. Those skilled in the art will know or be able to recognize those adhesive polymers which can be used to advantage to ensure good interlayer adhesion. Typical adhesives are olefin-based polymers and copolymers, usually having some carboxyl-type modifications. Examples of these are those sold under the trade names of Admer, Plexar, CXA and AP.

FIGURE 3 represents a structure similar in all respects to FIGURE 2 except that one of the contiguous HDPE layers is omitted. Layer 120 is a polypropylene sealant layer and corresponds to layer 20 mentioned above. Similarly, layer 122 has a composition comprising a high percentage of HDPE. Similarly, too, layer 128 is the oxygen barrier layer such as EVOH or nylon and layer 132 is the abuse resistant layer, such as OPP. Layers 126 and 130 correspond to layers 26 and 30 and are adhesive layers selected for their capability of ensuring good interlayer adhesion.

FIGURE 4 represents a structure similar in all respects to the FIGURE 3 structure, except that the abuse resistant outer layer and the second adhesive layer are omitted. Accordingly, the barrier layer, corresponding to layers 28, 128 of the previous embodiments, is now used to perform a second function of directly contacting the outside environment relative to the bag 10. The FIGURE 4 structure represents the simplest form of films useful in practising the invention. Layer 220 is a polypropylene sealant layer corresponding to layers 20, 120. Layer 222 has a composition comprising a high percentage of HDPE and corresponds to layers 22, 122. Layer 228 is the oxygen barrier layer such as EVOH or nylon. Layer 226 is an adhesive selected for its capability to ensure good interlayer adhesions.

The multiple layer packaging structures used in practising this invention can be made by a variety of conventional processes and combinations of processes. Typical of the useful processes are extrusion, coextrusion and extrusion lamination.

In order for the cockling problem to be significant in terms of appearance, the substance which is susceptible to oil absorption, and the attendant cockling, must be present as a significant percentage of the overall multiple layer film. Each of the films of this invention has the HDPE present in an amount over half of the weight content of the film. Typically, the layers susceptible to exhibiting the cockling phenomenon comprise 50% to 75% of the film.

EXAMPLE

A structure of the nature of that shown in FIGURE 2 was made by a combination of processes comprising coextrusion followed by extrusion lamination. In a first process, five extruders were utilized to coextrude a 2 mil (0.051 mm) thick, five layer structure corresponding to layers 20, 22, 24, 26 and 28 of FIGURE 2. Layer 20 was a propylene ethylene copolymer having 2.5% ethylene. Layer 22 was HDPE homopolymer. Layer 24 was HDPE homopolymer with 15% of a color concentrate in an LDPE concentrate base. Layer 26 was anhydride modified EVA. Layer 28 was EVOH copolymer. The thus coextruded film was, by layer thickness 20% PP layer 20, 65% HDPE as layers 22 and 24, 5% adhesive as layer 26 and 10% EVOH as layer 28. A layer of 45 gauge (0.14 mm) OPP -- corresponding to layer 32 in FIGURE 2 -- was then extrusion laminated to the EVOH layer using LDPE as the laminant which corresponds to layer 30 in FIGURE 2.

A comparative film was made identically except that the composition of its sealant layer -- corresponding to layer 20 of FIGURE 2 -- was a blend of ionomer, EVA and HDPE. In a second comparative film, otherwise identical, the sealant layer was ionomer.

The films were then made into packages containing potato chips as shown in FIGURE 1, and stored at accelerated aging conditions of 100°F (38°C) and 20% relative humidity. The packages were inspected periodically and judged regarding the degree of cockling observed. Based on these inspections, the packages were rated on a scale of 1 to 5, with 1 representing no observable cockling, and 5 representing severe cockling. Table 1 shows the results of the ratings.

TABLE 1

| Example I.D. | Sealant Layer Compositions | Rating at Time Shown | | | |
|---|---|---|---|---|---|
| | | 48 Hrs. | 73 Hrs. | 92 Hrs. | 139 Hrs. |
| Invention | PP | 2 | 2 | 2 | 2 |
| Comparative Example 1 | Blend of ionomer, EVA, HDPE | 4 | 5 | 5 | 5 |
| Comparative Example 2 | Ionomer | 2 | 3 | 3 | 4 |

The results in Table 1 show that the polypropylene sealant layer was effective in reducing the cockling over an extended period of time under accelerated aging conditions. It should be noted that the snack industry generally considers that, at maximum, a 72 hr. test is indicative of acceptability of a packaging material if it scores "2" or better on the rating. It is seen that both of the comparative examples failed at 73 hours, while the example of the invention continued to meet the required rating after 139 hours.

Thus it is seen that the invention provides an improved multiple layer sheet material for use in packages with oil-containing products. The improved sheet material, when used in this packaging application, exhibits reduced tendency to cockle upon contact with oil, even under extended accelerated aging tests. The inclusion of either EVOH or nylon in the package structure provides good protection from oxygen infusion. The inclusion of HDPE in the structure provides good protection from water vapour infusion.

Claims:

1. A package comprising a multiple layer flexible packaging sheet material for a product containing an oil, wherein the flexible sheet material is characterised by comprising:

(a) a first layer (22, 24; 122, 222) which is susceptible to absorption of oil and to swelling upon oil absorption, the layer comprising high density polyethylene;

(b) a second layer (20) of polypropylene or a propylene-rich copolymer or polymer blend adhered to one surface of the first layer, and located between the first layer and the product; and

(c) a third layer (26, 126, 226) adhere to the other surface of the first layer and serving as an adhesive to adhere a fourth, barrier layer (28, 128, 228) to the first layer.

2. A package according to claim 1, further characterised in that the fourth layer (28, 128) has, on its surface opposite the said adhesive layer (26, 126), a second adhesive layer (30, 130) which adheres a fifth layer (32, 132) comprising an abuse resistant polymer to the fourth layer.

3. A package according to claim 2, wherein the abuse-resistant polymer is an oriented polypropylene.

4. A package according to claim 1, 2 or 3, characterised by including another layer (24) of high density polyethylene which is interposed between the first and second layers.

5. A package according to claim 1, 2, 3 or 4, wherein the oil susceptible layer or layers (22, 24; 122, 222) comprise high density polyethylene homopolymer or a blend rich in said homopolymer.

6. A package according to any of claims 1 to 5, wherein the fourth layer (28, 128, 228) is an ethylene vinyl alcohol copolymer or a nylon.

7. A package according to any of claims 1 to 6, sealed closed and containing an oil-containing product such as potato chips.

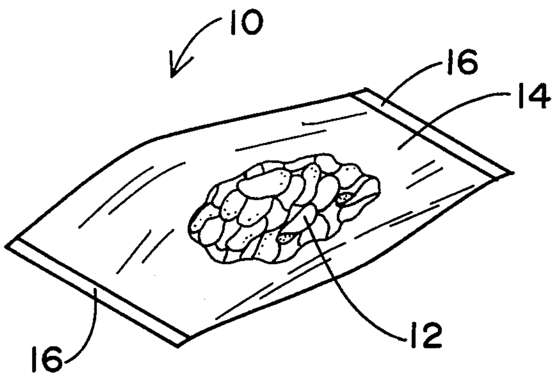


FIG. 1

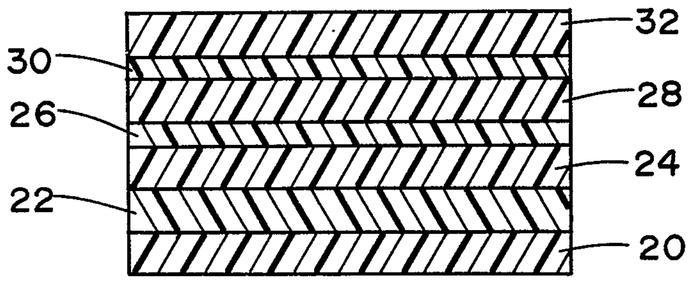


FIG. 2

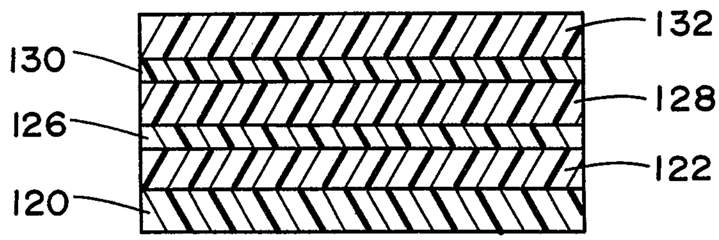


FIG. 3

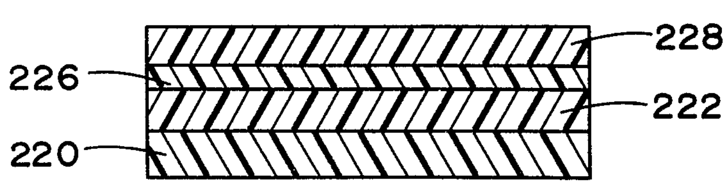


FIG. 4

European Patent Office

# EUROPEAN SEARCH REPORT

0119703

Application number

EP 84 30 0678

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-1 351 073 (SOCIETE D'ETUDES & D'EXPLOITATIONS TECHNIQUE, S.E.E.T.) * Claims 1-3,6,7; page 2 * | 1-7 | B 32 B 27/08<br>B 65 D 75/26 |
| Y | FR-A-1 538 111 (ESSO RESEARCH AND ENGINEERING CO.) * Claims 1,3,4-6; example 2; page 1, lines 73-83; page 3, lines 93-101 * | 1,4,5,7 | |
| Y | GB-A-1 271 995 (DU PONT DE NEMOURS) * Claims 1,2; examples 1, 3-1; page 3, lines 33-43 * | 2,3,6,7 | |
| Y | US-A-4 058 647 (INOUE et al.) * Claims 1,7,8; column 2, lines 40-47, 53-54; column 4, lines 20-62 * | 6 | TECHNICAL FIELDS SEARCHED (Int. Cl. 3)<br>B 32 B |
| A | | 3 | |
| A | GB-A-1 441 178 (DU PONT DE NEMOURS) * Claims 1-5,10,11; column 8, lines 5-10 * | 1,7 | |

--- -/-

The present search report has been drawn up for all claims

| Place of search | Date of completion of the search | Examiner |
|---|---|---|
| THE HAGUE | 15-05-1984 | DE LA MORINERIE B.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

**EUROPEAN SEARCH REPORT**

0119703

Application number

EP 84 30 0678

Page 2

| Category | Citation of document with indication, where appropriate, of relevant passages | Relevant to claim | CLASSIFICATION OF THE APPLICATION (Int. Cl. 3) |
|---|---|---|---|
| A | FR-A-2 228 610 (W.R. GRACE & CO.) * Claim 1; page 3, line 21 - page 4, line 12; examples 1,2,4,8,11,12 * ----- | 1-3 | |
| | | | TECHNICAL FIELDS SEARCHED (Int. Cl. 3) |
| | | | |

The present search report has been drawn up for all claims

| Place of search | Date of completion of the search | Examiner |
|---|---|---|
| THE HAGUE | 15-05-1984 | DE LA MORINERIE B.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82